# EUROPÄISCHE PATENTSCHRIFT

(11) **EP 1 926 925 B1**
(45) Veröffentlichungstag und Bekanntmachung des Hinweises auf die Patenterteilung: **24.02.2010**
(21) Anmeldenummer: 06777080.0
(22) Anmeldetag: 26.08.2006
(51) Int. Cl.: F16H 57/02, F16C 19/28, F16C 33/48, F16C 35/063

(54) **LAGERUNG EINES ZAHNRADS, WELCHES ALS UMKEHRRAD UND ALS SCHALTBARES LOSRAD DIENT**
BEARING FOR A GEARWHEEL WHICH SERVES AS A REVERSING GEAR AND AS A SHIFTABLE FREE GEAR
SUPPORT POUR UNE ROUE DENTEE SERVANT DE ROUE D'INVERSION ET DE ROUE LIBRE COMMANDABLE

(30) Priorität: 13.09.2005 DE 102005043477
(43) Veröffentlichungstag der Anmeldung: 04.06.2008
(73) Patentinhaber: GM Global Technology Operations, Inc., Detroit, MI 48265-3000 (US)
(72) Erfinder: DETLEFFSEN, Nico, 55130 Mainz (DE)
(74) Vertreter: Strauss, Peter
(86) Internationale Anmeldenummer: PCT/EP2006/008382
(87) Internationale Veröffentlichungsnummer: WO 2007/031189

(56) Entgegenhaltungen:
- DE-A1- 3 929 677
- DE-A1- 19 860 688
- DR.-ING. JOHANNES LOOMAN: "Zahnradgetriebe: Grundlagen, Konstruktionen, Anwendungen in Fahrzeugen" 1996, SPRINGER-VERLAG , BERLIN, HEIDELBERG, NEW YORK , XP002405737 ISBN 3-540-60336-0 Seite 166 - Seite 168; Abbildung 6.27
- SCHIEMANN S: "LAGERUNGEN DER WELLEN UND ZAHNRAEDER IN STIRNRADGETRIEBEN" ANTRIEBSTECHNIK, VEREINIGTE FACHVERLAGE, MAINZ, DE, Bd. 32, Nr. 7, 1. Juli 1993 (1993-07-01), Seiten 34,36-39, XP000386027 ISSN: 0722-8546

## Beschreibung

Die Erfindung betrifft ein Getriebe mit einer besonders ausgebildeten Hauptwelle.

Bei Getrieben, die für den Vorwärts- und Rückwärtsbetrieb von Kraftfahrzeugen eingesetzt werden, werden häufig Umkehrritzel bzw. Idler-Ritzel oder Idler eingesetzt, die auf einer Hauptwelle oder Zwischenwelle eingesetzt werden.

Zum einen soll die Lagerung des Idlers große Radialkräfte aushalten, die beim Einsatz im ersten Gang bzw. im Rückwärtsgang auftreten. Gleichzeitig treten bei schrägverzahnten Idlern große Axialkräfte auf.

Die DE 103 453 50 A1, die JP 1 120 432 und die DE 103 298 70 beschäftigen sich mit der Aufnahme von Axialkräften wie sie in Getrieben auftreten. Die DE 218 844 A1, die JP 9 049 526 und die DE 4 332 038 A1 zeigen Radiallagerkäfige, die so ausgestaltet sind, dass das Radiallager auch Axialkräfte aufnehmen kann.

Aus der DE 198 60 688 A1 ist ein mehrteiliger Wälzlagerkäfig bekannt, der bei einer mehrreihigen Anordnung von Wälzlagerkäfigen unterschiedliche relative Drehzahlen der einzelnen Lagerkränze ermöglicht. Verschiedene Möglichkeiten für die Lagerung von Wellen sind auch aus S. Schiemann: "Lagerungen der Wellen und Zahnräder in Stirnradgetrieben", Antriebstechnik, Vereinigte Fachverlage, Mainz, Bd. 32, Nr. 7, 1. Juli 1993 bekannt.

Die Schrift J. Lohmann: "Zahnradgetriebe: Grundlagen, Konstruktionen, Anwendungen in Fahrzeugen", 1996, Springer-Verlag, Berlin, Heidelberg, New York, Seiten 166 bis 168 offenbart insbesondere in ihrer Abbildung 6.27 ein Getriebe nach dem Oberbegriff des Anspruchs 1.

Die Aufgabe der Erfindung liegt darin, ein belastbares Getriebe bereitzustellen, das nur eine geringe Baugröße hat.

Diese Aufgabe wird durch den Gegenstand der unabhängigen Patentansprüche gelöst. Vorteilhafte Weiterbildungen ergeben sich aus den abhängigen Patentansprüchen.

Die Erfindung geht dabei von der Erkenntnis aus, dass die bekannten Gestaltungen dadurch verbessert werden können, dass die Lagerung des Idlers besonders ausgebildet wird.

Zum einen werden anstelle von Nadellagern zweireihige Zylinderrollenlager verwendet, deren Käfig geteilt ausgeführt ist. Die Käfighälften sind ineinander einklickbar. Dadurch ergibt sich eine einfache Montage des Getriebes, weil der auf die Hauptwelle aufgesetzte Idler mit den beiden Lagerhälften versehen werden kann. Die Käfighälften sind dabei im allgemeinen Fall Lagerkäfigteile, die in einem Verbindungsbereich ineinander eingeschnappt sind.

Dabei kann ein Lagerkäfigteil in dem Verbindungsbereich eine umlaufende Nut aufweisen. Wenn dann der andere Lagerkäfigteil in dem Verbindungsbereich wenigstens eine flexible Haltenase aufweist, die in zusammengesetztem Zustand der beiden Lagerkäfigteile in der Nut eingeschnappt ist, dann ergibt sich eine besonders einfache Gestaltung.

Ein Mittelbord im Idler zwischen den beiden Lagerhälften stellt eine Übertragung der Axialkräfte vom Idler auf die Lagerkörper bereit.

Anders als im Stand der Technik sollen wenigstens einige Stirnflächen der im Lagerkäfig aufgenommenen zylindrischen Lagerkörper nicht an den Lagerkäfigen selbst anliegen, die sich ihrerseits unmittelbar an den benachbarten Flächen im Getriebe abstützen. Bei der Erfindung werden Axialkräfte direkt über die Lagerkörper an benachbarte Abstützflächen im Getriebe weitergegeben, und zwar ohne Beaufschlagung des Lagerkäfigs.

Wenn eine solche Idler-Lagerung eingesetzt wird, dann ergeben sich eine große Belastbarkeit und eine geringe Baugröße bei gleichzeitig geringen Herstellungskosten.

Die Erfindung ist in der Zeichnung anhand eines Ausführungsbeispiels veranschaulicht.
- Fig. 1: zeigt eine schematische Axialansicht eines Kfz-Getriebes,
- Fig. 2: zeigt eine schematische Seitenansicht auf das Kfz-Getriebe aus Fig. 1, und
- Fig. 3: zeigt eine Schnittansicht im Bereich eines Idler-Ritzel des Getriebes aus Fig. 1 und Fig. 2.

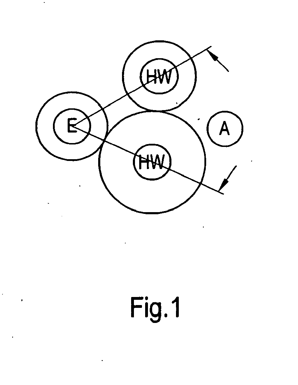

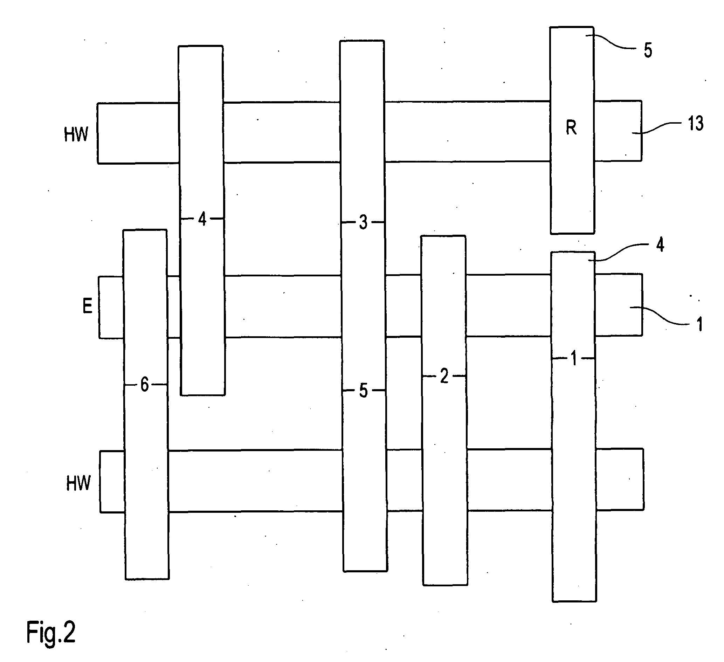

In den Figuren 1 und 2 ist ein Getriebe für ein Kraftfahrzeug mit einem Verbrennungsmotor gezeigt. Das Getriebe weist eine Eingangswelle E bzw. 1, eine Ausgangswelle A und zwei übereinander liegenden Hauptwellen HW auf.

Auf diesen Getriebewellen sind eine Vielzahl von Getriebezahnrädern angeordnet, die jeweils Paarungen für die Gänge 1 bis 6 bilden. Die Gangordnungszahl ist jeweils an der betreffenden Zahnradpaarung in Figur 2 angegeben. Verbindungen zwischen den Getrieberädern und den Getriebewellen werden über nicht gezeigte Schaltmuffen hergestellt.

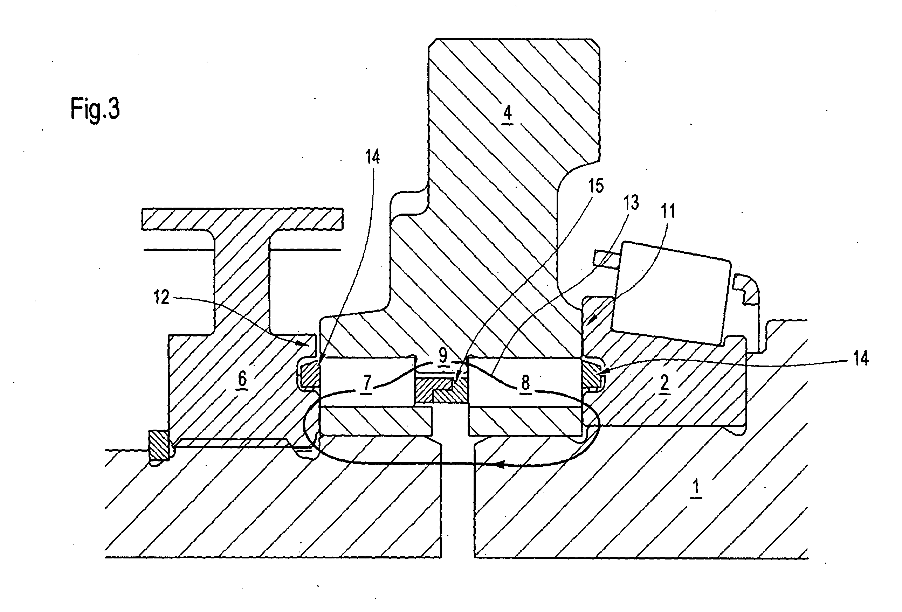

Eines der Zähnräder für den "ersten Gang", nämlich das Zahnrad 4, ist als so genannter "Idler" eingesetzt. Die Lagerung dieses Idler-Zahnrads 4 ist in Figur 3 genauer dargestellt. Bezugsziffern sind in einem eckigen Kasten dargestellt.

Wie man dort sieht, ist der Idler 4 auf zwei Zylinderrollen 7, 8 radial gelagert, die sich innenseitig jeweils an einem umlaufenden Absatz 9 abstützen. Dieser Absatz 9 wird auch "Mittelbord" genannt.

Im Betrieb, wenn nämlich das Idler-Zahnrad 4 als Umlenkrad für den Rückwärtsgang "R" verwendet wird, dreht dieses auf der Eingangswelle 1, und zwar unter radialer Lagerung durch die Zylinderrollen 7 und 8, die in einem Lagerkäfig 14 gehalten sind.

Zusätzlich zu den radialen Kräften treten dann axiale Kräfte auf, weil nämlich das Idler-Zahnrad 4 schrägverzahnt ist. Diese axialen Kräfte werden über den Mittelbord 9 und - je nach Richtung der Axialkraft verschieden - über die Stirnseiten der Zylinderrollen 7 bzw. 8 in die Eingangswelle 1 eingeleitet. In der Darstellung in Figur 3 wird zum Einleiten dieser Axialkraft entweder der Innenring 2 eines benachbarten Kegelrollenlagers verwendet bzw. auf der anderen Seite der benachbarte Innenring eines Muffenträgers 6. Der Kraftfluss ist dabei durch eine geschlossene Kraftlinie 13 verdeutlicht. Wie man deutlich sieht, werden die Axialkräfte nicht über den Lagerkäfig 14 übertragen.

Der Lagerkäfig 14 ist zweiteilig ausgebildet, wobei die beiden Hälften über eine Klickverbindung 15 zusammenklickbar ausgebildet sind. Dabei hat das linke Lagerkäfigteil in dem Verbindungsbereich 15 eine umlaufende Nut. Das rechte Lagerkäfigteil hat in dem Verbindungsbereich 15 flexible Haltenasen, die in zusammengesetztem Zustand der beiden Lagerkäfigteile in der Nut eingeschnappt sind.

Dieses Einklicken eines Lagerkäfigs -eines Nadellagers spielt bei der Erfindung insofern eine Rolle, als die Zylinderrollenlager 7 und 8 bei der Montage mit ihren Käfighälften ebenfalls miteinander eingeklickt werden, um zusammen mit dem Idler-Zahnrad 4 eine leicht zu handhabende Einheit zu bilden. Der Idler 4 lässt sich in aufgesetztem Zustand auf die Eingangswelle 1 auch nachträglich mit den Käfighälften versehen.

## Patentansprüche

1. Getriebe für ein Kraftfahrzeug mit einem Verbrennungsmotor, wobei das Getriebe eine Eingangswelle (E, 1), eine Ausgangswelle (A) und Hauptwellen (HW) aufweist, auf denen Getriebezahnräder angeordnet sind, die jeweils Gang-Paarungen bilden und von denen wenigstens eines selektiv über eine Schaltmuffe auf seiner bereffenden Getriebewelle arretierbar ist, wobei eines der Zähnräder als schrägverzahntes Umkehrzahnrad (4) ausgebildet und selektiv für eine vorwärtsgangpaarung bzw. für eine Rückwärtsgangpaarung schaltbar ist,
das Umkehrzahnrad (4) auf einem zweireihigen Zylinderrollenlager mit linken Zylinderrollen (7) und mit rechten Zylinderrollen (8) gelagert ist, die sich innenseitig jeweils an einem umlaufenden Mittelbord (9) im Umkehrzahnrad (4) abstützen, wobei die linken Zylinderrollen (7) und die rechten Zylinderrollen (8) in einem Lagerkäfig (14) gehalten sind,
**dadurch gekennzeichnet, dass**
der Lagerkäfig (14) so ausgebildet ist, dass der Kraftfluss (13) für axiale Kräfte zwischen dem Umkehrzahnrad (4) und seiner Getriebewelle (1) unter Auslassung des Lagerkäfigs (14) durch den Mittelbord (9) und über daran unmittelbar anliegende Stirnseiten der Zylinderrollen (7, 8), durch die gegenüberliegenden Stirnseiten der Zylinderrollen (7, 8) und durch unmittelbar an den Zylinderrollen (7, 8) anliegende, benachbarte Bauteile (6, 2) in die Eingangswelle (1) eingeleitet wird.

2. Getriebe nach Anspruch 1,
**dadurch gekennzeichnet, dass**
der Lagerkäfig (14) zweiteilig ausgeführt ist und Lagerkäfigteile in einem Verbindungsbereich (15) ineinander eingeschnappt sind.

3. Getriebe nach Anspruch 2, **dadurch gekennzeichnet, dass** ein Lagerkäfigteil in dem Verbindungsbereich (15) eine umlaufende Nut aufweist und dass der anderen Lagerkäfigteil in dem Verbindungsbereich (15) wenigstens eine flexible Haltenase aufweist, die in zusammengesetztem Zustand der beiden Lagerkäfigteile in der Nut eingeschnappt sind.

## Claims

1. A transmission for a motor vehicle, comprising an internal combustion engine, with the transmission having an input shaft (E, 1), an output shaft (A) and main shafts (HW) on which gearwheels are arranged which each form gear pairings and of which at least one can be arrested selectively via a sliding clutch on its respective gear shaft, with one of the gearwheels being arranged as a helical-cut reversing gear (4) and can be shifted selectively for a forward gear pairing or for a reversing gear pairing, the reversing gear (4) being on a double-row cylindrical roller bearing with left cylindrical rollers (7) and with right cylindrical rollers (8) which each rest on the inside on a revolving centre rib (9) in the reversing gear (4), with the left cylindrical rollers (7) and the right cylindrical rollers (8) being held in a bearing cage (14), **characterized in that** the bearing cage (14) is arranged in such a way that the power flow (13) for axial forces between the reversing gear (4) and its transmission shaft (1) is introduced into the input shaft (1) by omitting the bearing cage (14) by the central rib (9) and via directly adjacent face sides of the cylindrical rollers (7, 8), through the opposite face sides of the cylindrical rollers (7, 8) and by adjacent components (6, 2) which sit close directly in contact with the cylindrical rollers (7, 8).

2. A transmission according to claim 1, **characterized in that** the bearing cage (14) is arranged in two parts and the bearing cage parts are latched into each other in a connecting region (15).

3. A transmission according to claim 2, **characterized in that** one bearing cage part comprises a circumferential groove in the connecting region (15) and the other bearing cage part comprises at least one flexible holding nose in the connecting region (15) which is latched into the groove in the assembled state of the two bearing cage parts.

## Revendications

1. Boîte de vitesses pour un véhicule à moteur avec un moteur à combustion interne, laquelle boîte de vitesses présente un arbre d'entrée (E, 1), un arbre de sortie (A) et des arbres principaux (HW) sur lesquels sont disposées des roues dentées d'engrenage formant chacune des paires de rapports et dont au moins une peut être bloquée sélectivement par un manchon de changement de rapport sur l'arbre de boîte correspondant, l'une des roues dentées étant conformée comme une roue inversable à denture oblique (4) et pouvant être sélectivement commutée pour un couplage en marche avant ou un couplage en marche arrière,
la roue dentée inversable (4) est supportée sur un roulement à rouleaux cylindriques avec des rouleaux cylindriques de gauche (7) et des rouleaux cylindriques de droite (8) qui s'appuient chacun du côté intérieur sur un rebord central (9) circonférentiel dans la roue dentée inversable (4), les rouleaux cylindriques de gauche (7) et les rouleaux cylindriques de droite (8) étant retenus dans une cage de roulement (14),
**caractérisée en ce que** la cage de roulement (14) est conformée de telle façon que le flux de force (13) des forces axiales entre la roue dentée inversable (4) et son arbre de boîte (1) est transmis, en laissant à l'écart la cage de roulement (14), par le rebord central (9) et les faces d'extrémité directement contiguës des rouleaux cylindriques (7, 8), par les faces d'extrémité opposées des rouleaux cylindriques (7, 8) et par des pièces (6, 2) dans l'arbre d'entrée (1) immédiatement contiguës des rouleaux cylindriques (7, 8).

2. Boîte de vitesses selon la revendication 1, **caractérisée en ce que** la cage de roulement (14) est réalisée en deux parties et les parties de la cage de roulement sont emboîtées l'une dans l'autre dans une zone d'assemblage (15).

3. Boîte de vitesses selon la revendication 2, **caractérisée en ce qu'**une partie de la cage de roulement présente dans la zone d'assemblage (15) une gorge continue et **en ce que** l'autre partie de la cage de roulement présente dans la zone d'assemblage (15) au moins un ergot de maintien flexible qui s'enclenche dans la gorge quand les deux parties de cage de roulement sont assemblées.
